# FASCICULE DE BREVET EUROPEEN

(11) **EP 4 310 001 B1**
(45) Date de publication et mention de la délivrance du brevet: **06.11.2024**
(21) Numéro de dépôt: 23173254.6
(22) Date de dépôt: 12.05.2023
(51) Int. Cl.: B64C 27/14, B64D 31/00, B64D 35/02, B64D 27/24, B64D 35/08, B64D 27/02, B64C 27/12, B64D 31/06

(54) **AÉRONEF COMPORTANT AU MOINS DEUX TURBOMOTEURS ET UN DISPOSITIF CONFIGURE POUR ETRE RELIE A UN DES TURBOMOTEURS ET PROCEDE DE CONTROLE D'UN TEL AÉRONEF**
FLUGZEUG MIT MINDESTENS ZWEI TRIEBWERKEN UND EINER VORRICHTUNG, DIE ZUR VERBINDUNG MIT EINEM TURBOMOTOR KONFIGURIERT IST, UND VERFAHREN ZUR STEUERUNG EINES SOLCHEN FLUGZEUGS
AIRCRAFT COMPRISING AT LEAST TWO TURBOSHAFT ENGINES AND A DEVICE CONFIGURED TO BE CONNECTED TO ONE OF THE TURBOSHAFT ENGINES AND METHOD FOR CONTROLLING SUCH AN AIRCRAFT

(30) Priorité: 20.07.2022 FR 2207457
(43) Date de publication de la demande: 24.01.2024
(73) Titulaire: Airbus Helicopters, 13725 Marignane Cedex (FR)
(72) Inventeur: CERQUEIRA, Stéphane, 13510 EGUILLES (FR)
(74) Mandataire: GPI Brevets

(56) Documents cités:
- EP-A1- 3 660 276
- EP-A2- 2 724 939
- FR-A1- 2 993 243

## Description

La présente invention concerne le domaine des aéronefs tels des giravions ou des hélicoptères comportant au moins deux turbomoteurs.

Plus précisément, l'aéronef objet de l'invention comporte un dispositif configuré pour être relié à un premier turbomoteur de l'aéronef. Un tel dispositif comporte une machine électrique et une source d'énergie électrique connectées électriquement entre elles.

La source d'énergie électrique peut par exemple comporter une batterie, un super condensateur, une pile à combustible, un alternateur ou encore une autre machine électrique connectée à un second turbomoteur.

La machine électrique permet quant à elle de générer et de transmettre un couple moteur ou d'exercer un couple résistant sur un générateur de gaz du premier turbomoteur.

Le générateur de gaz du premier turbomoteur est quant à lui apte à entraîner en rotation une turbine libre dudit premier turbomoteur.

De façon générale, chaque turbomoteur est alors relié à une boîte de transmission de puissance permettant d'entraîner en rotation un rotor de sustentation, voire de propulsion, un rotor de commande des mouvements de lacet de l'aéronef ou encore une hélice.

Une telle machine électrique peut ainsi fonctionner selon un mode moteur en recevant de l'énergie électrique depuis la source d'énergie électrique et en générant une énergie mécanique ou inversement selon un mode générateur en recevant de l'énergie mécanique du générateur de gaz et en générant une énergie électrique transmise à la source d'énergie électrique.

Ainsi, le document FR 2929324 divulgue une machine électrique réversible apte à fonctionner selon un mode moteur et selon un mode générateur. Ces deux modes peuvent être mis en oeuvre alternativement en mettant en prise mécanique la machine électrique soit sur un générateur de gaz du turbomoteur pour effectuer un démarrage standard du turbomoteur, soit sur une turbine libre du turbomoteur pour permettre son entraînement en rotation en mode de générateur d'énergie électrique.

En outre, tel que décrit dans les documents EP 3209563 et EP 2635782, il est connu d'utiliser une machine électrique pour pouvoir effectuer un démarrage rapide d'un turbomoteur initialement dans un état de veille correspondant à un régime de ralenti ou de super ralenti.

Ce démarrage rapide peut par exemple être réalisé en vol à la demande du pilote ou automatiquement. Un tel démarrage rapide permet de passer d'une mode de pilotage dit économique à un mode de pilotage dit normal. Un tel démarrage rapide du turbomoteur en veille peut faire suite à un besoin de puissance pour effectuer une manoeuvre de pilotage particulière ou à un besoin de sécurité supérieur, par exemple pour survoler une zone urbaine et donc fortement peuplée.

Le document FR 3019215 décrit quant à lui un dispositif d'assistance pour une turbomachine comportant une machine électrique permettant d'assister ponctuellement une accélération ou décélération d'un générateur de gaz.

Cette machine électrique est connectée à un organe de stockage électrique pour pouvoir fournir de l'énergie électrique à la machine électrique ou pour être rechargée par la machine électrique. En outre, un tel dispositif peut permettre de réaliser les fonctions de démarrage normal, de démarrage d'urgence, de ventilation sèche et d'assistance en vol.

Les documents FR2993243, FR2962404, FR2914697 et EP2724939 décrivent quant à eux des architectures de motorisation hybride pour giravion comportant un rotor, un turbomoteur permettant d'entrainer en rotation le rotor et une machine électrique apte à fournir une assistance de puissance au turbomoteur.

Une telle assistance de puissance permet de transmettre un couple moteur au générateur de gaz lorsque le générateur de gaz tourne à une vitesse de rotation dite « transitoire », c'est à dire inférieure à une valeur de seuil correspondant à une vitesse de rotation nom inale.

Le document FR2986570 décrit quant à lui un dispositif et un procédé de régulation d'une installation motrice comportant au moins un turbomoteur. Un tel dispositif permet d'augmenter la puissance développée par un turbomoteur lorsque la vitesse de rotation Ng du générateur de gaz a atteint une limite.

Pour effectuer une telle augmentation de puissance, une machine électrique prélève mécaniquement de l'énergie sur le générateur de gaz. Il en résulte la création d'un couple résistant sur le générateur de gaz et la vitesse de rotation Ng du générateur de gaz décroit. Pour contrer le couple résistant, le calculateur moteur augmente le débit de carburant alimentant le turbomoteur. La vitesse de rotation de la turbine libre reste donc constante et la puissance développée par le turbomoteur à partir de cette turbine libre augmente.

Par ailleurs, les documents FR3089247 et EP3660276 divulgue un dispositif permettant de ventiler un turbomoteur directement lorsque ce dernier est arrêté sans devoir recourir à une phase stabilisée du turbomoteur fonctionnant à un régime de ralenti. Cette ventilation est réalisée en transmettant un couple moteur à des organes tournants du générateur de gaz du turbomoteur avec une machine électrique. La rotation des organes tournants permet de ventiler la chambre à combustion avec des gaz frais et d'évacuer les gaz de combustion et les fluides résiduels alors que la chambre à combustion du turbomoteur est éteinte.

La présente invention a alors pour objet de proposer un dispositif permettant de s'affranchir des limitations mentionnées ci-dessus et de mutualiser différentes fonctions avec un unique dispositif relié à un turbomoteur.

L'invention se rapporte donc à un aéronef comportant un dispositif configuré pour être relié à un premier turbomoteur de l'aéronef, l'aéronef comportant au moins un second turbomoteur et au moins un rotor, ledit au moins un rotor étant entraîné en rotation par l'un au moins des premier et second turbomoteurs, le dispositif comportant une machine électrique et une source d'alimentation électrique.

En outre, le dispositif comporte au moins un contrôleur configuré pour mettre en oeuvre à chaque instant un mode courant de fonctionnement de la machine électrique et de la source d'alimentation électrique, le mode courant de fonctionnement étant choisi parmi au moins sept modes de fonctionnement, les sept modes de fonctionnement comportant :
- un premier mode selon lequel la machine électrique réalise un démarrage standard du premier turbomoteur initialement dans un état éteint, le démarrage standard étant obtenu par une mise en rotation d'un générateur de gaz du premier turbomoteur avec la machine électrique, le démarrage standard permettant de mettre le premier turbomoteur dans un état allumé,
- un deuxième mode selon lequel la machine électrique réalise un démarrage rapide du premier turbomoteur initialement dans un état de veille correspondant à un régime moteur choisi parmi le groupe comportant un régime de ralenti et un régime de super ralenti, dans l'état de veille le premier turbomoteur ne fournissant aucune puissance à une boîte de transmission de puissance,
- un troisième mode selon lequel la machine électrique fournit une première assistance de puissance au premier turbomoteur, la première assistance de puissance permettant de transmettre un couple moteur au générateur de gaz du premier turbomoteur lorsqu'une turbine libre du premier turbomoteur tourne à une vitesse de rotation supérieure ou égale à une valeur de seuil, la première assistance de puissance étant effectuée sous la dépendance d'une détection d'une panne dudit au moins un second turbomoteur de l'aéronef,
- un quatrième mode selon lequel la machine électrique fournit une seconde assistance de puissance au premier turbomoteur, la seconde assistance de puissance permettant de transmettre un couple moteur au générateur de gaz du premier turbomoteur lorsque la turbine libre du premier turbomoteur tourne à une vitesse de rotation inférieure à la valeur de seuil, la seconde assistance de puissance étant effectuée sous la dépendance d'une détection d'une panne dudit au moins un second turbomoteur de l'aéronef, d'une chute d'une vitesse de rotation dudit au moins un rotor ou d'une chute d'une vitesse de rotation de la turbine libre du premier turbomoteur,
- un cinquième mode selon lequel la machine électrique applique une résistance mécanique au premier turbomoteur, la machine électrique permettant d'exercer un couple résistant sur le générateur de gaz du premier turbomoteur,
- un sixième mode selon lequel la machine électrique participe à une ventilation du premier turbomoteur dans l'état éteint, la ventilation permettant d'évacuer des gaz du premier turbomoteur, la machine électrique permettant de transmettre un couple moteur au générateur de gaz du premier turbomoteur, et
- un septième mode selon lequel la machine électrique est au repos, la machine électrique au repos ne fournissant aucun couple moteur ni aucun couple résistant au générateur de gaz du premier turbomoteur.

Autrement dit, au moins un contrôleur permet de mettre en oeuvre le mode courant de fonctionnement de la machine électrique et de la source d'alimentation électrique d'un même dispositif. Par suite, le ou les contrôleurs sont reliés à la machine électrique et à la source d'alimentation électrique pour transmettre des consignes de commande ou instructions permettant de mettre en oeuvre le mode de fonctionnement courant.

En outre, une telle mise en oeuvre peut avantageusement être générée automatiquement par ledit au moins un contrôleur. Dans ce cas, le ou les contrôleurs peuvent être connectés avec des senseurs de différentes natures permettant par exemple de mesurer des paramètres physico-chimiques de l'environnement extérieur à l'aéronef, des paramètres physico-chimiques liés au fonctionnement des premier et second turbomoteurs et/ou des paramètres de position, de vitesse de déplacement, d'accélération ou d'attitude de l'aéronef.

En fonction du paramètre mesuré ou des différents paramètres mesurés, le ou les contrôleurs peuvent alors mettre en oeuvre un mode de fonctionnement le plus adapté à la situation courante à partir de lois de commande prédéfinies par des tests, des essais et/ou des simulations. Une fois établies, ces lois de commande sont par exemple mémorisées dans une unité de stockage embarquée dans l'aéronef sous forme d'une base de données, de tables de valeurs, etc...

Selon une possibilité compatible avec la précédente, la mise en oeuvre du mode courant de fonctionnement peut également être sélectionnée au moyen d'une consigne de commande transmise par une interface homme-machine audit au moins un contrôleur. Un membre de l'équipage peut ainsi actionner ou commander l'interface homme-machine pour que le ou les contrôleurs mettent en oeuvre un mode de fonctionnement spécifique parmi les au moins sept modes.

Une telle interface homme-machine est alors en communication filaire ou sans fil avec le ou les contrôleurs. Par exemple, une telle interface homme-machine peut comprendre un bouton, un clavier, une surface tactile, un microphone permettant à un opérateur d'effectuer une commande vocale, un organe de pointage tel une souris, un pavé tactile ou une boule multidirectionnelle ...

En outre, ledit au moins un contrôleur peut être un contrôleur dédié à la mise en oeuvre du mode courant de fonctionnement de la machine électrique et de la source d'alimentation électrique.

Alternativement, ledit au moins un contrôleur peut être un contrôleur de l'aéronef partagé pour réaliser d'autres fonctions que celle de mettre en oeuvre le mode courant de fonctionnement de la machine électrique et de la source d'alimentation électrique. Par exemple, ledit au moins un contrôleur peut comporter un calculateur d'un système avionique équipant l'aéronef ou encore un calculateur d'un système de commande des turbomoteurs de l'aéronef généralement désigné par l'expression anglaise « Full Authority Digital Engine Control » et par son acronyme « FADEC ».

Ledit au moins un contrôleur peut présenter plusieurs calculateurs reliés entre eux par voie filaire ou non filaire pour mettre en oeuvre le mode courant de fonctionnement selon l'un des différents modes de fonctionnement de la machine électrique et de la source d'alimentation électrique.

De manière connue, à un régime de veille, dit super-ralenti, l'arbre du générateur de gaz tourne à une vitesse comprise entre 10 et 60% de la vitesse nominale et à un régime de veille, dit ralenti, l'arbre du générateur de gaz tourne à une vitesse comprise entre 40 et 80% de la vitesse nominale.

Selon l'invention, un tel aéronef est remarquable en ce que, en vol et sous la dépendance d'une détection d'une panne dudit au moins un second turbomoteur, ledit au moins un contrôleur est configuré pour mettre en oeuvre successivement pendant une même phase de vol le deuxième mode, le septième mode puis le troisième mode.

Autrement dit, lorsque le premier turbomoteur est en veille et en cas de panne du second turbomoteur, le ou les contrôleurs peuvent alors permettre à la machine électrique de réaliser un démarrage rapide du premier turbomoteur initialement dans un état de veille.

Une fois le démarrage rapide du premier turbomoteur effectué, le ou les contrôleurs peuvent stopper l'alimentation électrique de la machine électrique par la source d'alimentation électrique pour mettre la machine électrique au repos.

Enfin, le ou les contrôleurs peuvent à nouveau permettre de commander l'alimentation électrique de la machine électrique par la source d'alimentation électrique pour fournir la première assistance de puissance au premier turbomoteur.

En outre, la source d'alimentation électrique peut présenter une capacité totale supérieure ou égale à la somme d'une première capacité configurée pour que ledit au moins un contrôleur mettre en oeuvre le deuxième mode pendant une première durée prédéterminée et d'une seconde capacité configurée pour que ledit au moins un contrôleur mettre en oeuvre le troisième mode pendant une troisième durée prédéterminée.

En d'autres termes, la source d'alimentation électrique peut stocker suffisamment d'énergie électrique pour permettre à la machine électrique de fournir un couple moteur au premier turbomoteur successivement pendant la première durée prédéterminée puis pendant la troisième durée prédéterminée.

Par suite, la capacité totale de la source d'alimentation électrique peut être déterminée en fonction des caractéristiques de l'aéronef, et de sa masse en particulier, ainsi que des performances de la machine électrique.

Par suite, la source d'alimentation électrique peut stocker suffisamment d'énergie électrique pour permettre à la machine électrique de fournir un couple moteur au premier turbomoteur pendant la première durée prédéterminée.

Selon un exemple de réalisation avantageux, la première durée peut être comprise entre 10 secondes et 30 secondes.

Avantageusement, le septième mode peut être mis en oeuvre par ledit au moins un contrôleur pendant une deuxième durée prédéterminée.

En d'autres termes, la source d'alimentation électrique ne fournit pas d'énergie électrique à la machine électrique pendant la deuxième durée prédéterminée.

En pratique, la deuxième durée peut être comprise entre 10 secondes et 60 secondes.

Avantageusement, la troisième durée peut être comprise entre 0 secondes et 30 secondes.

La présente invention a aussi pour objet un procédé de contrôle d'un aéronef comportant un dispositif configuré pour être relié à un premier turbomoteur équipant l'aéronef, l'aéronef comportant au moins un second turbomoteur et au moins un rotor, ledit au moins un rotor étant entraîné en rotation par l'un au moins desdits premier et second turbomoteurs, le dispositif comportant une machine électrique et une source d'alimentation électrique.

Un tel procédé comporte une mise en oeuvre à chaque instant avec au moins un contrôleur d'un mode courant de fonctionnement de la machine électrique et de la source d'alimentation électrique, le mode courant de fonctionnement étant choisi parmi au moins sept modes de fonctionnement, les sept modes de fonctionnement comportant :
- un premier mode selon lequel la machine électrique réalise un démarrage standard du premier turbomoteur initialement dans un état éteint, le démarrage standard étant obtenu par une mise en rotation d'un générateur de gaz du premier turbomoteur avec la machine électrique, le démarrage standard permettant de mettre le premier turbomoteur dans un état allumé,
- un deuxième mode selon lequel la machine électrique réalise un démarrage rapide du premier turbomoteur initialement dans un état de veille correspondant à un régime moteur choisi parmi le groupe comportant un régime de ralenti et un régime de super ralenti, dans l'état de veille le premier turbomoteur ne fournissant aucune puissance à une boîte de transmission de puissance,
- un troisième mode selon lequel la machine électrique fournit une première assistance de puissance au premier turbomoteur, la première assistance de puissance permettant de transmettre un couple moteur au générateur de gaz du premier turbomoteur lorsqu'une turbine libre du premier turbomoteur tourne à une vitesse de rotation supérieure ou égale à une valeur de seuil, la première assistance de puissance étant effectuée sous la dépendance d'une détection d'une panne dudit au moins un second turbomoteur de l'aéronef,

- un quatrième mode selon lequel la machine électrique fournit une seconde assistance de puissance au premier turbomoteur, la seconde assistance de puissance permettant de transmettre un couple moteur au générateur de gaz du premier turbomoteur lorsque la turbine libre du premier turbomoteur tourne à une vitesse de rotation inférieure à la valeur de seuil, la seconde assistance de puissance étant effectuée sous la dépendance d'une détection d'une panne dudit au moins un second turbomoteur dudit aéronef, d'une chute d'une vitesse de rotation dudit au moins un rotor ou d'une chute d'une vitesse de rotation de la turbine libre du premier turbomoteur,
- un cinquième mode selon lequel la machine électrique applique une résistance mécanique au premier turbomoteur, la machine électrique permettant d'exercer un couple résistant sur le générateur de gaz du premier turbomoteur,
- un sixième mode selon lequel la machine électrique participe à une ventilation du premier turbomoteur dans l'état éteint, la ventilation permettant d'évacuer des gaz du premier turbomoteur, la machine électrique permettant de transmettre un couple moteur au générateur de gaz du premier turbomoteur, et
- un septième mode selon lequel la machine électrique est au repos, la machine électrique au repos ne fournissant aucun couple moteur ni aucun couple résistant au générateur de gaz du premier turbomoteur.

Autrement dit, une telle mise en oeuvre permet d'adapter en vol et au sol le mode de fonctionnement de la machine électrique et de la source d'alimentation électrique en fonction des besoins notamment de puissance, de couple ou de refroidissement du premier turbomoteur.

Selon l'invention, un tel procédé est remarquable en ce que, en vol et sous la dépendance d'une détection d'une panne dudit au moins un second turbomoteur, le deuxième mode, le septième mode puis le troisième mode sont mis en oeuvre successivement avec ledit au moins un contrôleur pendant une même phase de vol.

En d'autres termes, le procédé peut permettre de mettre en oeuvre les uns après les autres le deuxième, le septième et le troisième modes de fonctionnement dans le cas où un ou plusieurs seconds turbomoteurs tomberaient en panne et où le premier turbomoteur serait initialement en veille.

En pratique, le deuxième mode peut être mis en oeuvre par ledit au moins un contrôleur pendant une première durée prédéterminée, le septième mode peut être mis en oeuvre par ledit au moins un contrôleur pendant une deuxième durée prédéterminée, puis le troisième mode peut être mis en oeuvre par ledit au moins un contrôleur pendant une troisième durée prédéterminée.

L'invention et ses avantages apparaîtront avec plus de détails dans le cadre de la description qui suit avec des exemples donnés à titre illustratif en référence aux figures annexées qui représentent :
la figure 1, un schéma d'un aéronef en vue de coté, conformément à l'invention,
la figure 2, un diagramme illustrant une mise en oeuvre de plusieurs modes de fonctionnement successivement,
la figure 3, un logigramme illustrant un procédé de fonctionnement d'un dispositif équipant un aéronef, conformément à l'invention et
la figure 4, un logigramme illustrant la séquence des modes de fonctionnement de la figure 2.

Les éléments présents dans plusieurs figures distinctes sont affectés d'une seule et même référence.

Comme déjà évoqué, l'invention concerne un aéronef comportant au moins deux turbomoteurs et notamment un premier turbomoteur et au moins un second turbomoteur. Le premier turbomoteur et/ou le ou les seconds turbomoteurs sont alors aptes à entrainer en rotation au moins un rotor.

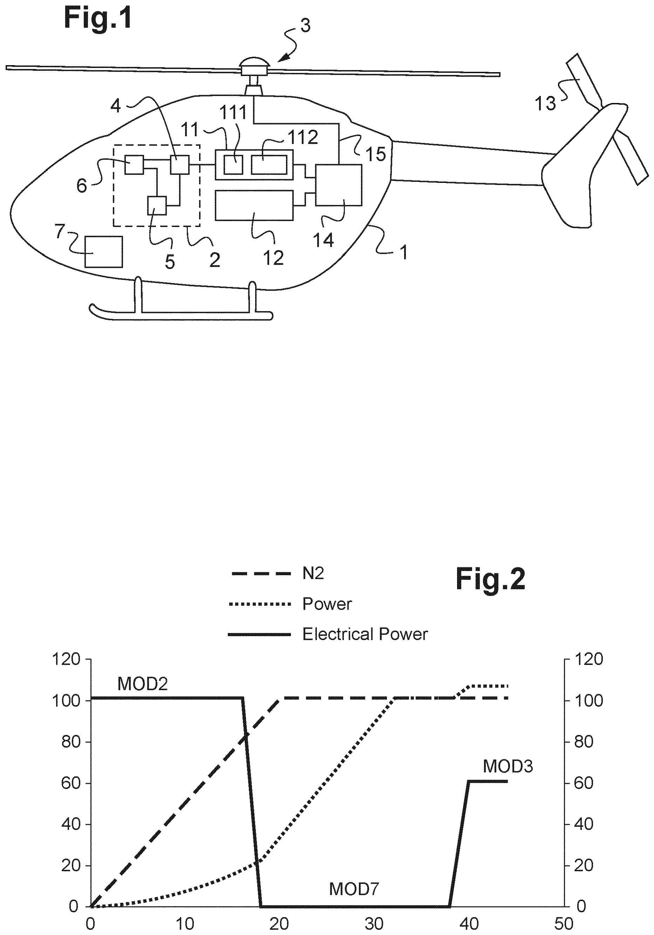

Tel que représenté à la figure 1, un tel aéronef 1 peut être un hélicoptère. Bien entendu, l'invention ne se limite pas à ce type d'aéronef et peut se rapporter à un avion ou tout type de giravion.

Indépendamment de la nature de l'aéronef 1, cet aéronef 1 comporte ainsi un premier turbomoteur 11 et au moins un second turbomoteur 12 agencés en parallèle afin de pouvoir chacun entraîner en rotation indépendamment le ou les rotors 3, 13 quel que soit l'état de l'autre turbomoteur ou des autres turbomoteurs.

Ces premier et second turbomoteurs 11, 12 peuvent comporter chacun une turbine libre reliée par exemple à un arbre d'entrée d'une boîte de transmission de puissance 14. Une telle boîte de transmission de puissance 14 peut quant à elle comporter par exemple un arbre de sortie relié à un mât rotor 15 solidaire en rotation d'un rotor 3 de sustentation et de propulsion et éventuellement à un arbre auxiliaire entraînant en rotation un rotor 13 de commande des mouvements de lacet de l'aéronef 1.

En outre, un tel aéronef 1 comporte un dispositif 2 configuré pour être relié au moins temporairement au premier turbomoteur 11 durant certaines phases de vol ou encore au sol.

Un tel dispositif 2 comporte une machine électrique 4 et une source d'alimentation électrique 5. La machine électrique 4 peut être connectée à un générateur de gaz 111 du premier turbomoteur 11 pour pouvoir lui transmettre un couple moteur ou alternativement pour exercer un couple résistant sur le générateur de gaz 111 du premier turbomoteur 11.

Par ailleurs, la source d'alimentation électrique 5 est quant à elle reliée à la machine électrique 4 pour fournir une énergie électrique à la machine électrique 4 fonctionnant en mode moteur ou alternativement pour recevoir et stocker de l'énergie électrique fournie par la machine électrique 4 fonctionnant en mode générateur.

Le dispositif 2 comporte également au moins un contrôleur 6.

Ce ou ces contrôleurs 6 peuvent comprendre un contrôleur dédié à la mise en oeuvre du mode courant de fonctionnement de la machine électrique 4 et de la source d'alimentation électrique 5.

Selon un autre exemple, le ou les contrôleurs 6 peuvent comprendre un contrôleur de l'aéronef 1 partagé pour réaliser d'autres fonctions en dehors de paramétrer le mode courant de fonctionnement de la machine électrique 4 et de la source d'alimentation électrique 5. Par exemple, le ou les contrôleurs peuvent comporter un calculateur d'un système avionique équipant l'aéronef 1 ou encore un calculateur d'un système de commande des turbomoteurs de l'aéronef 1 généralement désigné par l'expression anglaise « Full Authority Digital Engine Control » et par son acronyme « FADEC ».

Le ou les contrôleurs 6 sont alors configurés pour mettre en oeuvre à chaque instant un mode courant de fonctionnement de la machine électrique 4 et de la source d'alimentation électrique 5. Un tel mode courant de fonctionnement est alors choisi parmi au moins sept modes de fonctionnement distincts les uns des autres.

Un premier mode MOD1 peut être mis en oeuvre, avantageusement au sol, par le ou les contrôleurs 6 pour permettre à la machine électrique 4 de réaliser un démarrage standard du premier turbomoteur 11 initialement dans un état éteint. Un tel démarrage standard est alors mis en oeuvre en fournissant un couple moteur et en entraînant en rotation le générateur de gaz 111 du premier turbomoteur 11 avec la machine électrique 4.

Le premier mode MOD1 permet ainsi de réaliser un démarrage standard de manière à allumer le premier turbomoteur 11 et par exemple permettre ensuite un décollage de l'aéronef 1.

Dans ce premier mode MOD1, le ou les contrôleurs 6 commandent alors l'alimentation électrique de la machine électrique 4, afin de la faire fonctionner en mode moteur, par la source d'alimentation électrique 5 pour entraîner en rotation le générateur de gaz 111 du premier turbomoteur 11. Une telle alimentation électrique de la machine électrique 4 peut par exemple être commandée au moyen d'un relais électromécanique ou d'un interrupteur de puissance pilotable apte à fermer un circuit d'alimentation en énergie électrique de la machine électrique 4.

Un deuxième mode MOD2 peut être mis en oeuvre, par exemple en vol, par le ou les contrôleurs 6 lorsque le premier turbomoteur 11 est dans un état de veille et pour que la machine électrique 4 fournisse un couple moteur au premier turbomoteur 11. Ce deuxième mode MOD2 permet de réaliser un démarrage rapide du premier turbomoteur 11 initialement à un régime moteur de ralenti ou de super ralenti. Dans ce cas, le ou les rotors 3, 13 sont alors initialement entraînés en rotation par le ou les seconds turbomoteurs 12.

En outre, ce deuxième mode MOD2 peut être mis en oeuvre par exemple pour effectuer une manoeuvre nécessitant une puissance maximale en complément de celle fournie par le ou les seconds turbomoteurs 12 ou en cas de panne détectée au niveau du ou des seconds turbomoteurs 12 par des moyens usuels en communication avec le ou les contrôleurs et, dans ce cas, pour fournir une puissance en remplacement de celle précédemment fournie par le ou les seconds turbomoteurs 12. Un tel deuxième mode MOD2 permet ainsi de redémarrer rapidement le premier turbomoteur 11 fonctionnant initialement en mode économique pour limiter une consommation en carburant par exemple lors d'un vol dit en palier à vitesse constante effectué au moyen du ou des seconds turbomoteurs 12.

Comme précédemment pour le premier mode MOD1, ce deuxième mode MOD2 peut être mis en oeuvre par le ou les contrôleurs 6 en commandant l'alimentation électrique par la source d'alimentation électrique 5 de la machine électrique 4, afin de la faire fonctionner en mode moteur, pour entraîner en rotation le générateur de gaz 111 du premier turbomoteur 11. Une telle alimentation électrique de la machine électrique 4 peut par exemple être commandée au moyen d'un relais électromécanique ou d'un interrupteur de puissance pilotable apte à fermer un circuit d'alimentation en énergie électrique de la machine électrique 4.

Un troisième mode MOD3 peut être mis en oeuvre, par exemple en vol, par le ou les contrôleurs 6 pour que la machine électrique 4 fournisse une première assistance de puissance au premier turbomoteur 11. Cette première assistance de puissance permet de transmettre un couple moteur au générateur de gaz 111 lorsqu'une turbine libre 112 du premier turbomoteur 11 tourne à une vitesse de rotation supérieure ou égale à une valeur de seuil. Cette valeur de seuil peut correspondre à une valeur nominale prédéfinie. Cette première assistance de puissance est alors effectuée sous la dépendance d'une détection d'une panne du ou des seconds turbomoteurs 12 de l'aéronef 1.

A l'instar du premier mode MOD1 et du deuxième mode MOD2, ce troisième mode MOD3 peut être mis en oeuvre par le ou les contrôleurs 6 en commandant l'alimentation électrique de la machine électrique 4, afin de la faire fonctionner en mode moteur, par la source d'alimentation électrique 5 pour entraîner en rotation le générateur de gaz 111 du premier turbomoteur 11. Une telle alimentation électrique de la machine électrique 4 peut par exemple être commandée au moyen d'un relais électromécanique ou d'un interrupteur de puissance pilotable apte à fermer un circuit d'alimentation en énergie électrique de la machine électrique 4.

En outre, un quatrième mode MOD4 peut être mis en oeuvre, par exemple en vol, par le ou les contrôleurs 6 pour que la machine électrique 4 puisse fournir une seconde assistance de puissance au premier turbomoteur 11. Cette seconde assistance de puissance permet de transmettre un couple moteur au générateur de gaz 111 tant que la turbine libre 112 tourne à une vitesse de rotation inférieure à la valeur de seuil.

Cette seconde assistance de puissance est alors par exemple mise en oeuvre lors d'une phase transitoire correspondant à une accélération ou décélération de la vitesse de rotation de la turbine libre 112. De plus, une telle seconde assistance de puissance est effectuée sous la dépendance d'une détection d'une panne du ou des seconds turbomoteurs 12 de l'aéronef 1 par des moyens usuels en communication avec le ou les contrôleurs, d'une chute d'une vitesse de rotation dudit au moins un rotor 3, 13 ou d'une chute d'une vitesse de rotation de la turbine libre 112.

De même que précédemment, ce quatrième mode MOD4 peut être mis en oeuvre par le ou les contrôleurs 6 en commandant l'alimentation électrique de la machine électrique 4, afin de la faire fonctionner en mode moteur, par la source d'alimentation électrique 5 pour entraîner en rotation le générateur de gaz 111 du premier turbomoteur 11. Une telle alimentation électrique de la machine électrique 4 peut par exemple être commandée au moyen d'un relais électromécanique ou d'un interrupteur de puissance pilotable apte à fermer un circuit d'alimentation en énergie électrique de la machine électrique 4.

Un cinquième mode MOD5 peut être mis en oeuvre, par exemple en vol, par le ou les contrôleurs 6 pour que la machine électrique 4 applique une résistance mécanique au premier turbomoteur 11. Dans ce cas, la machine électrique 4 permet alors d'exercer un couple résistant sur le générateur de gaz 111.

Ce cinquième mode MOD5 peut quant à lui être mis en oeuvre par le ou les contrôleurs 6 en commandant la charge de la source d'alimentation électrique 5 par la machine électrique 4 fonctionnant alors en mode frein ou générateur. Une telle machine électrique 4 est alors entraînée en rotation par le générateur de gaz 111 du premier turbomoteur 11. Une telle charge de la source d'alimentation électrique 5 peut par exemple être commandée au moyen d'un relais électromécanique ou d'un interrupteur de puissance pilotable apte à fermer un circuit de charge en énergie électrique de la source d'alimentation électrique 5.

Un sixième mode MOD6 peut être mis en oeuvre, par exemple au sol, par le ou les contrôleurs 6 pour que la machine électrique 4 permette de ventiler le premier turbomoteur 11 dans l'état éteint. Une telle ventilation permet d'évacuer des gaz du premier turbomoteur 11. La machine électrique 4 permet alors de transmettre un couple moteur à un organe tournant du générateur de gaz 111, tel qu'un compresseur par exemple, la rotation de l'organe tournant générant le déplacement des gaz présents dans le premier turbomoteur 11.

De même que précédemment pour les premier, deuxième, troisième et quatrième mode, ce sixième mode MOD6 peut être mis en oeuvre par le ou les contrôleurs 6 en commandant l'alimentation électrique de la machine électrique 4, afin de la faire fonctionner en mode moteur, par la source d'alimentation électrique 5 pour entraîner en rotation le générateur de gaz 111 du premier turbomoteur 11. Une telle alimentation électrique de la machine électrique 4 peut par exemple être commandée au moyen d'un relais électromécanique ou d'un interrupteur de puissance pilotable apte à fermer un circuit d'alimentation en énergie électrique de la machine électrique 4.

Enfin, un septième mode MOD7 peut être mis en oeuvre, par exemple au sol ou en vol, par le ou les contrôleurs 6 pour que la machine électrique 4 soit au repos. Lorsque la machine électrique 4 est au repos, celle-ci ne fournit pas de couple moteur ou de couple résistant au générateur de gaz 111.

Ce septième mode MOD7 peut quant à lui être mis en oeuvre par le ou les contrôleurs 6 en commandant un relais électromécanique ou d'un interrupteur de puissance pilotable apte à ouvrir un circuit de charge en énergie électrique de la source d'alimentation électrique 5 et/ou un circuit d'alimentation en énergie électrique de la machine électrique 4.

En outre, la mise en oeuvre du mode courant de fonctionnement peut être réalisée automatiquement ou encore au moyen d'une consigne de commande transmise par une interface homme-machine 7 à un ou aux contrôleurs 6. Un membre de l'équipage de l'aéronef 1 peut ainsi actionner ou commander l'interface homme-machine 7 pour que le ou les contrôleurs 6 mettent en oeuvre un mode de fonctionnement spécifique parmi les au moins sept modes.

Une telle interface homme-machine 7 est alors en communication filaire ou sans fil avec le ou les contrôleurs 6. Par exemple, une telle interface homme-machine 7 peut comprendre un bouton, un clavier, une surface tactile, un microphone permettant à un opérateur d'effectuer une commande vocale, un organe de pointage tel une souris, un pavé tactile et/ou une boule multidirectionnelle ...

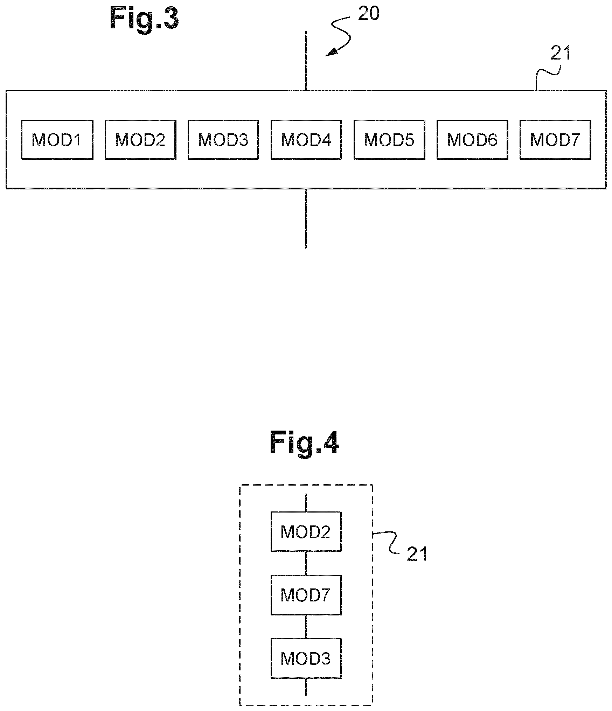

Telle que représentée à la figure 3, l'invention concerne également un procédé 20 de contrôle d'un aéronef 1 comportant un dispositif 2 configuré pour être relié au premier turbomoteur 11 équipant l'aéronef 1.

Un tel procédé 20 comporte alors une mise en oeuvre 21 à chaque instant avec le ou les contrôleurs 6 d'un mode courant de fonctionnement de la machine électrique 4 et de la source d'alimentation électrique 5 parmi au moins les sept modes de fonctionnement MOD1 à MOD7.

Tel que représenté aux figures 2 et 4, le ou les contrôleurs 6 peuvent être configurés pour mettre en oeuvre en vol, selon la mise en oeuvre 21, le deuxième mode MOD2, le septième mode MOD7 puis le troisième mode MOD3.

Dans ce cas, la source d'alimentation électrique 5 peut présenter une capacité totale supérieure ou égale à la somme de la première capacité permettant au ou aux contrôleurs 6 de mettre en oeuvre le deuxième mode MOD2 pendant une première durée prédéterminée et de la seconde capacité permettant au ou aux contrôleurs 6 de mettre le troisième mode MOD3 pendant une troisième durée prédéterminée.

Ainsi, le deuxième mode MOD2 peut être mis en oeuvre pendant une première durée prédéterminée comprise par exemple entre 10 secondes et 60 secondes. Une telle mise en oeuvre du deuxième mode MOD2 permet alors à la turbine libre 112 du premier turbomoteur 11 d'atteindre une vitesse de rotation nominale plus rapidement qu'avec seulement le générateur de gaz 111.

Ensuite, le septième mode MOD7 peut être mis en oeuvre pendant une deuxième durée prédéterminée comprise par exemple entre 10 secondes et 60 secondes.

Enfin, le troisième mode MOD3 peut être mis en oeuvre pendant une troisième durée prédéterminée comprise par exemple entre 10 secondes et 60 secondes. Une telle mise en oeuvre du troisième mode MOD3 permet alors à la turbine libre 112 de fournir ponctuellement une puissance supplémentaire tout en restant à sa vitesse de rotation nominale.

De façon analogue, un dispositif 2 peut être relié à un second turbomoteur 12, voire à chaque turbomoteur équipant un aéronef 1. Dans ce cas, une autre machine électrique et une autre source d'alimentation électrique, non représentées, sont reliées à au moins un second turbomoteur 12.

Le ou les contrôleurs 6 peuvent alors être dédiés à chaque dispositif 2 ou bien être mutualisés pour mettre en oeuvre les différents modes de fonctionnement de la machine électrique 4 et de la source d'alimentation électrique 5 reliées au premier turbomoteur 11 et la machine électrique 4 et de la source d'alimentation électrique 5 reliées au second turbomoteur 12.

Par ailleurs, le ou les contrôleurs 6 peuvent être reliés à différents senseurs afin d'identifier une panne de l'un des seconds turbomoteurs 12, une vitesse de rotation des générateurs de gaz ou de turbines libres des premier et second turbomoteurs 11 et 12, un état de l'aéronef 1 posé au sol ou en vol, des paramètres physico-chimiques liés au fonctionnement des premier et second turbomoteurs 11,12 et des paramètres de position, de vitesse de déplacement, d'accélération ou d'attitude de l'aéronef 1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) comportant un dispositif (2) configuré pour être relié à un premier turbomoteur (11) dudit aéronef (1), ledit aéronef (1) comportant au moins un second turbomoteur (12) et au moins un rotor (3, 13), ledit au moins un rotor (3, 13) étant entraîné en rotation par l'un au moins desdits premier et second turbomoteurs (11 et 12), ledit dispositif (2) comportant une machine électrique (4) et une source d'alimentation électrique (5), ledit dispositif (2) comportant au moins un contrôleur (6) configuré pour mettre en oeuvre à chaque instant un mode courant de fonctionnement de ladite machine électrique (4) et de ladite source d'alimentation électrique (5), ledit mode courant de fonctionnement étant choisi parmi au moins sept modes de fonctionnement, lesdits sept modes de fonctionnement comportant :
• un premier mode (MOD1) selon lequel ladite machine électrique (4) réalise un démarrage standard dudit premier turbomoteur (11) initialement dans un état éteint, ledit démarrage standard étant obtenu par une mise en rotation d'un générateur de gaz (111) dudit premier turbomoteur (11) avec ladite machine électrique (4), ledit démarrage standard permettant de mettre ledit premier turbomoteur (11) dans un état allumé,
• un deuxième mode (MOD2) selon lequel ladite machine électrique (4) réalise un démarrage rapide dudit premier turbomoteur (11) initialement dans un état de veille correspondant à un régime moteur choisi parmi le groupe comportant un régime de ralenti et un régime de super ralenti, dans ledit état de veille ledit premier turbomoteur (11) ne fournissant aucune puissance à une boîte de transmission de puissance (14),
• un troisième mode (MOD3) selon lequel ladite machine électrique (4) fournit une première assistance de puissance audit premier turbomoteur (11), ladite première assistance de puissance permettant de transmettre un couple moteur audit générateur de gaz (111) dudit premier turbomoteur (11) lorsqu'une turbine libre (112) dudit premier turbomoteur (11) tourne à une vitesse de rotation supérieure ou égale à une valeur de seuil, ladite première assistance de puissance étant effectuée sous la dépendance d'une détection d'une panne dudit au moins un second turbomoteur (12) dudit aéronef (1),
• un quatrième mode (MOD4) selon lequel ladite machine électrique (4) fournit une seconde assistance de puissance audit premier turbomoteur (11), ladite seconde assistance de puissance permettant de transmettre un couple moteur audit générateur de gaz (111) dudit premier turbomoteur (11) lorsque ladite turbine libre (112) dudit premier turbomoteur (11) tourne à une vitesse de rotation inférieure à ladite valeur de seuil, ladite seconde assistance de puissance étant effectuée sous la dépendance d'une détection d'une panne dudit au moins un second turbomoteur (12) dudit aéronef (1), d'une chute d'une vitesse de rotation dudit au moins un rotor (3, 13) ou d'une chute d'une vitesse de rotation de ladite turbine libre (112) dudit premier turbomoteur (11),
• un cinquième mode (MOD5) selon lequel ladite machine électrique (4) applique une résistance mécanique audit premier turbomoteur (11), ladite machine électrique (4) permettant d'exercer un couple résistant sur ledit générateur de gaz (111) dudit premier turbomoteur (11),
• un sixième mode (MOD6) selon lequel ladite machine électrique (4) participe à une ventilation dudit premier turbomoteur (11) dans ledit état éteint, ladite ventilation permettant d'évacuer des gaz dudit premier turbomoteur (11), ladite machine électrique (4) permettant de transmettre un couple moteur audit générateur de gaz (111) dudit premier turbomoteur (11), et
• un septième mode (MOD7) selon lequel ladite machine électrique (4) est au repos, ladite machine électrique (4) au repos ne fournissant aucun couple moteur ni aucun couple résistant audit générateur de gaz (111) dudit premier turbomoteur (11),
tel que, en vol et sous la dépendance d'une détection d'une panne dudit au moins un second turbomoteur (12), ledit au moins un contrôleur (6) est configuré pour mettre en oeuvre successivement pendant une même phase de vol ledit deuxième mode (MOD2), ledit septième mode (MOD7) puis ledit troisième mode (MOD3).

2. Aéronef selon la revendication 1,
**caractérisé en ce que** ladite source d'alimentation électrique (5) présente une capacité totale supérieure ou égale à la somme d'une première capacité configurée pour que ledit au moins un contrôleur (6) mettre en oeuvre ledit deuxième mode (MOD2) pendant une première durée prédéterminée et d'une seconde capacité configurée pour que ledit au moins un contrôleur (6) mettre en oeuvre ledit troisième mode (MOD3) pendant une troisième durée prédéterminée.

3. Aéronef selon la revendication 2,
**caractérisé en ce que** ladite première durée est comprise entre 10 secondes et 60 secondes.

4. Aéronef selon l'une quelconque des revendications 2 à 3,
**caractérisé en ce que** ledit septième mode (MOD7) est mis en oeuvre par ledit au moins un contrôleur (6) pendant une deuxième durée prédéterminée.

5. Aéronef selon la revendication 4,
**caractérisé en ce que** ladite deuxième durée est comprise entre 10 secondes et 60 secondes.

6. Aéronef selon l'une quelconque des revendications 2 à 5,
**caractérisé en ce que** ladite troisième durée est comprise entre 10 secondes et 60 secondes.

7. Procédé (20) de contrôle d'un aéronef (1) comportant un dispositif (2) configuré pour être relié à un premier turbomoteur (11) équipant ledit aéronef (1), ledit aéronef (1) comportant au moins un second turbomoteur (12) et au moins un rotor (3, 13), ledit au moins un rotor (3, 13) étant entraîné en rotation par l'un au moins desdits premier et second turbomoteurs (11 et 12), ledit dispositif (2) comportant une machine électrique (4) et une source d'alimentation électrique (5), que ledit procédé (20) comportant une mise en oeuvre (21) à chaque instant avec au moins un contrôleur (6) d'un mode courant de fonctionnement de ladite machine électrique (4) et de ladite source d'alimentation électrique (5), ledit mode courant de fonctionnement étant choisi parmi au moins sept modes de fonctionnement, lesdits sept modes de fonctionnement comportant :
• un premier mode (MOD1) selon lequel ladite machine électrique (4) réalise un démarrage standard dudit premier turbomoteur (11) initialement dans un état éteint, ledit démarrage standard étant obtenu par une mise en rotation d'un générateur de gaz (111) dudit premier turbomoteur (11) avec ladite machine électrique (4), ledit démarrage standard permettant de mettre ledit premier turbomoteur (11) dans un état allumé,
• un deuxième mode (MOD2) selon lequel ladite machine électrique (4) réalise un démarrage rapide dudit premier turbomoteur (11) initialement dans un état de veille correspondant à un régime moteur choisi parmi le groupe comportant un régime de ralenti et un régime de super ralenti, dans ledit état de veille ledit premier turbomoteur (11) ne fournissant aucune puissance à une boîte de transmission de puissance (14),
• un troisième mode (MOD3) selon lequel ladite machine électrique (4) fournit une première assistance de puissance audit premier turbomoteur (11), ladite première assistance de puissance permettant de transmettre un couple moteur audit générateur de gaz (111) dudit premier turbomoteur (11) lorsqu'une turbine libre (112) dudit premier turbomoteur (11) tourne à une vitesse de rotation supérieure ou égale à une valeur de seuil, ladite première assistance de puissance étant effectuée sous la dépendance d'une détection d'une panne dudit au moins un second turbomoteur (12) dudit aéronef (1),
• un quatrième mode (MOD4) selon lequel ladite machine électrique (4) fournit une seconde assistance de puissance audit premier turbomoteur (11), ladite seconde assistance de puissance permettant de transmettre un couple moteur audit générateur de gaz (111) dudit premier turbomoteur (11) lorsque ladite turbine libre (112) dudit premier turbomoteur (11) tourne à une vitesse de rotation inférieure à ladite valeur de seuil, ladite seconde assistance de puissance étant effectuée sous la dépendance d'une détection d'une panne dudit au moins un second turbomoteur (12) dudit aéronef (1), d'une chute d'une vitesse de rotation dudit au moins un rotor (3, 13) ou d'une chute d'une vitesse de rotation de ladite turbine libre (112) dudit premier turbomoteur (11),
• un cinquième mode (MOD5) selon lequel ladite machine électrique (4) applique une résistance mécanique audit premier turbomoteur (11), ladite machine électrique (4) permettant d'exercer un couple résistant sur ledit générateur de gaz (111) dudit premier turbomoteur (11),
• un sixième mode (MOD6) selon lequel ladite machine électrique (4) participe à une ventilation dudit premier turbomoteur (11) dans ledit état éteint, ladite ventilation permettant d'évacuer des gaz dudit premier turbomoteur (11), ladite machine électrique (4) permettant de transmettre un couple moteur audit générateur de gaz (111) dudit premier turbomoteur (11), et
• un septième mode (MOD7) selon lequel ladite machine électrique (4) est au repos, ladite machine électrique (4) au repos ne fournissant aucun couple moteur ni aucun couple résistant audit générateur de gaz (111) dudit premier turbomoteur (11),
tel que, en vol et sous la dépendance d'une détection d'une panne dudit au moins un second turbomoteur (12), ledit deuxième mode (MOD2), ledit septième mode (MOD7) puis ledit troisième mode (MOD3) sont mis en oeuvre successivement avec ledit au moins un contrôleur (6) pendant une même phase de vol.

8. Procédé selon la revendication 7,
**caractérisé en ce que** ledit deuxième mode (MOD2) est mis en oeuvre par ledit au moins un contrôleur (6) pendant une première durée prédéterminée, ledit septième mode (MOD7) est mis en oeuvre par ledit au moins un contrôleur (6) pendant une deuxième durée prédéterminée, puis ledit troisième mode (MOD3) est mis en oeuvre par ledit au moins un contrôleur (6) pendant une troisième durée prédéterminée.

## Patentansprüche

1. Luftfahrzeug (1) mit einer Vorrichtung (2), die konfiguriert ist, um mit einem ersten Triebwerk (11) des Luftfahrzeugs (1) verbunden zu sein, wobei das Luftfahrzeug (1) mindestens ein zweites Triebwerk (12) und mindestens einen Rotor (3, 13) aufweist, wobei der mindestens eine Rotor (3, 13) durch das erste und/oder das zweite Triebwerk (11 und 12) drehangetrieben ist, wobei die Vorrichtung (2) eine elektrische Maschine (4) und eine Stromquelle (5) aufweist, wobei die Vorrichtung (2) mindestens eine Steuerung (6) umfasst, die konfiguriert ist, um zu jedem Zeitpunkt einen aktuellen Betriebsmodus der elektrischen Maschine (4) und der Stromquelle (5) zu implementieren, wobei der aktuelle Betriebsmodus aus mindestens sieben Betriebsmodi ausgewählt wird, wobei die sieben Betriebsmodi umfassen:
• einen ersten Modus (MODI), in dem die elektrische Maschine (4) einen Standardstart des ursprünglich in einem ausgeschalteten Zustand befindlichen ersten Triebwerks (11) durchführt, wobei der Standardstart dadurch erreicht wird, dass ein Gasgenerator (111) des ersten Triebwerks (11) durch die elektrische Maschine (4) in Drehung versetzt wird, wobei der Standardstart das erste Triebwerk (11) in einen eingeschalteten Zustand bringt,
• einen zweiten Modus (MOD2), in dem die elektrische Maschine (4) einen Schnellstart des ursprünglich in einem Bereitschaftszustand befindlichen ersten Triebwerks (11) durchführt, der einem Triebwerksbetriebszustand entspricht, der aus der Gruppe ausgewählt ist, die einen Leerlaufbetriebszustand und einen Superleerlaufbetriebszustand umfasst, wobei das erste Triebwerk (11) in dem Bereitschaftszustand keine Leistung an ein Leistungsgetriebe (14) abgibt,
• einen dritten Modus (MOD3), in dem die elektrische Maschine (4) eine erste Leistungsunterstützung für das erste Triebwerk (11) bereitstellt, wobei die erste Leistungsunterstützung die Übertragung eines Motordrehmoments auf den Gasgenerator (111) des ersten Triebwerks (11) ermöglicht, wenn eine freie Turbine (112) des ersten Triebwerks (11) mit einer Drehzahl rotiert, die größer oder gleich einem Schwellenwert ist, wobei die erste Leistungsunterstützung in Abhängigkeit von einer Erfassung einer Störung des mindestens einen zweiten Triebwerks (12) des Luftfahrzeugs (1) durchgeführt wird,
• einen vierten Modus (MOD4), in dem die elektrische Maschine (4) eine zweite Leistungsunterstützung für das erste Triebwerk (11) bereitstellt, wobei die zweite Leistungsunterstützung die Übertragung eines Antriebsdrehmoments auf den Gasgenerator (111) des ersten Triebwerks (11) ermöglicht, wenn die freie Turbine (112) des ersten Triebwerks (11) mit einer Drehzahl rotiert, die kleiner ist als der Schwellenwert, wobei die zweite Leistungsunterstützung in Abhängigkeit von einer Erfassung einer Störung des mindestens einen zweiten Triebwerks (12) des Luftfahrzeugs (1), eines Abfalls einer Drehzahl des mindestens einen Rotors (3, 13) oder eines Abfalls einer Drehzahl der freien Turbine (112) des ersten Triebwerks (11) durchgeführt wird,
• einen fünften Modus (MOD5), in dem die elektrische Maschine (4) einen mechanischen Widerstand auf das erste Triebwerk (11) ausübt, wobei die elektrische Maschine (4) es ermöglicht, ein Widerstandsmoment auf den Gasgenerator (111) des ersten Triebwerks (11) auszuüben,
• einen sechsten Modus (MOD6), in dem die elektrische Maschine (4) zu einer Belüftung des ersten Triebwerks (11) in dem ausgeschalteten Zustand beiträgt, wobei die Belüftung es ermöglicht, Gase aus dem ersten Triebwerk (11) abzuziehen, wobei die elektrische Maschine (4) es ermöglicht, ein Antriebsdrehmoment auf den Gasgenerator (111) des ersten Triebwerks (11) zu übertragen, und
• einen siebten Modus (MOD7), in dem die elektrische Maschine (4) in Ruhe ist, wobei die elektrische Maschine (4) in Ruhe weder ein Antriebsdrehmoment noch ein Widerstandsdrehmoment an den Gasgenerator (111) des ersten Triebwerks (11) liefert,
so dass im Flug und in Abhängigkeit von einer Erfassung einer Störung des mindestens einen zweiten Triebwerks (12) die mindestens eine Steuerung (6) konfiguriert ist, um während einer gleichen Flugphase nacheinander den zweiten Modus (MOD2), den siebten Modus (MOD7) und dann den dritten Modus (MOD3) zu implementieren.

2. Luftfahrzeug nach Anspruch 1,
**dadurch gekennzeichnet, dass** die Stromquelle (5) eine Gesamtkapazität aufweist, die größer oder gleich der Summe ist aus einer ersten Kapazität, die so konfiguriert ist, dass der mindestens eine Controller (6) den zweiten Modus (MOD2) während einer ersten vorgegebenen Zeitdauer implementiert, und einer zweiten Kapazität, die so konfiguriert ist, dass der mindestens eine Controller (6) den dritten Modus (MOD3) während einer dritten vorgegebenen Zeitdauer implementiert.

3. Luftfahrzeug nach Anspruch 2,
**dadurch gekennzeichnet, dass** die erste Zeitdauer zwischen 10 Sekunden und 60 Sekunden beträgt.

4. Luftfahrzeug nach einem der Ansprüche 2 bis 3,
**dadurch gekennzeichnet, dass** der siebte Modus (MOD7) von der mindestens einen Controller (6) für eine zweite vorgegebene Zeitdauer implementiert wird.

5. Luftfahrzeug nach Anspruch 4,
**dadurch gekennzeichnet, dass** die zweite Zeitdauer zwischen 10 Sekunden und 60 Sekunden beträgt.

6. Luftfahrzeug nach einem der Ansprüche 2 bis 5,
**dadurch gekennzeichnet, dass** die dritte Zeitdauer zwischen 10 Sekunden und 60 Sekunden beträgt.

7. Verfahren (20) zum Steuern eines Luftfahrzeugs (1) mit einer Vorrichtung (2), die konfiguriert ist, um mit einem ersten Triebwerk (11) verbunden zu sein, mit dem das Luftfahrzeug (1) ausgestattet ist, wobei das Luftfahrzeug (1) mindestens ein zweites Triebwerk (12) und mindestens einen Rotor (3, 13) aufweist, wobei der mindestens eine Rotor (3, 13) von dem ersten und/oder dem zweiten Triebwerk (11 und 12) in Drehung versetzt wird, wobei die Vorrichtung (2) eine elektrische Maschine (4) und eine Stromquelle (5) umfasst, wobei das Verfahren (20) eine Implementierung (21) eines aktuellen Betriebsmodus der elektrischen Maschine (4) und der Stromquelle (5) zu jedem Zeitpunkt durch mindestens eine Steuerung (6) umfasst, wobei der aktuelle Betriebsmodus aus mindestens sieben Betriebsmodi ausgewählt wird, wobei die sieben Betriebsmodi umfassen:
• einen ersten Modus (MOD1), in dem die elektrische Maschine (4) einen Standardstart des ursprünglich in einem ausgeschalteten Zustand befindlichen ersten Triebwerks (11) durchführt, wobei der Standardstart dadurch erreicht wird, dass ein Gasgenerator (111) des ersten Triebwerks (11) durch die elektrische Maschine (4) in Drehung versetzt wird, wobei der Standardstart das erste Triebwerk (11) in einen eingeschalteten Zustand bringt,
• einen zweiten Modus (MOD2), in dem die elektrische Maschine (4) einen Schnellstart des ursprünglich in einem Bereitschaftszustand befindlichen ersten Triebwerks (11) durchführt, der einem Triebwerksbetriebszustand entspricht, der aus der Gruppe ausgewählt ist, die einen Leerlaufbetriebszustand und einen Superleerlaufbetriebszustand umfasst, wobei das erste Triebwerk (11) in dem Bereitschaftszustand keine Leistung an ein Leistungsgetriebe (14) abgibt,
• einen dritten Modus (MOD3), in dem die elektrische Maschine (4) eine erste Leistungsunterstützung für das erste Triebwerk (11) bereitstellt, wobei die erste Leistungsunterstützung die Übertragung eines Motordrehmoments auf den Gasgenerator (111) des ersten Triebwerks (11) ermöglicht, wenn eine freie Turbine (112) des ersten Triebwerks (11) mit einer Drehzahl rotiert, die größer oder gleich einem Schwellenwert ist, wobei die erste Leistungsunterstützung in Abhängigkeit von einer Erfassung einer Störung des mindestens einen zweiten Triebwerks (12) des Luftfahrzeugs (1) durchgeführt wird,
• einen vierten Modus (MOD4), in dem die elektrische Maschine (4) eine zweite Leistungsunterstützung für das erste Triebwerk (11) bereitstellt, wobei die zweite Leistungsunterstützung die Übertragung eines Antriebsdrehmoments auf den Gasgenerator (111) des ersten Triebwerks (11) ermöglicht, wenn die freie Turbine (112) des ersten Triebwerks (11) mit einer Drehzahl rotiert, die kleiner ist als der Schwellenwert, wobei die zweite Leistungsunterstützung in Abhängigkeit von einer Erfassung einer Störung des mindestens einen zweiten Triebwerks (12) des Luftfahrzeugs (1), eines Abfalls einer Drehzahl des mindestens einen Rotors (3, 13) oder eines Abfalls einer Drehzahl der freien Turbine (112) des ersten Triebwerks (11) durchgeführt wird,
• einen fünften Modus (MOD5), in dem die elektrische Maschine (4) einen mechanischen Widerstand auf das erste Triebwerk (11) ausübt, wobei die elektrische Maschine (4) es ermöglicht, ein Widerstandsmoment auf den Gasgenerator (111) des ersten Triebwerks (11) auszuüben,
• einen sechsten Modus (MOD6), in dem die elektrische Maschine (4) zu einer Belüftung des ersten Triebwerks (11) in dem ausgeschalteten Zustand beiträgt, wobei die Belüftung es ermöglicht, Gase aus dem ersten Triebwerk (11) abzuziehen, wobei die elektrische Maschine (4) es ermöglicht, ein Antriebsdrehmoment auf den Gasgenerator (111) des ersten Triebwerks (11) zu übertragen, und
• einen siebten Modus (MOD7), in dem die elektrische Maschine (4) in Ruhe ist, wobei die elektrische Maschine (4) in Ruhe weder ein Antriebsdrehmoment noch ein Widerstandsdrehmoment an den Gasgenerator (111) des ersten Triebwerks (11) liefert,
so dass im Flug und in Abhängigkeit von einer Erfassung einer Störung des mindestens einen zweiten Triebwerks (12) mit der mindestens einen Steuerung (6) während einer gleichen Flugphase nacheinander der zweite Modus (MOD2), der siebte Modus (MOD7) und dann der dritte Modus (MOD3) implementiert werden.

8. Verfahren nach Anspruch 7,
**dadurch gekennzeichnet, dass** der zweite Modus (MOD2) von der mindestens einen Steuerung (6) während einer ersten vorgegebenen Zeitdauer implementiert wird, der siebte Modus (MOD7) von der mindestens einen Steuerung (6) während einer zweiten vorgegebenen Zeitdauer implementiert wird und dann der dritte Modus (MOD3) von der mindestens einen Steuerung (6) während einer dritten vorgegebenen Zeitdauer implementiert wird.

## Claims

1. Aircraft (1) comprising a device (2) configured to be connected to a first turboshaft engine (11) of said aircraft (1), said aircraft (1) comprising at least one second turboshaft engine (12) and at least one rotor (3, 13), said at least one rotor (3, 13) being rotated by at least one of said first and second turboshaft engines (11 and 12), said device (2) comprising an electric machine (4) and an electrical power source (5), said device (2) comprising at least one controller (6) configured to implement a current operating mode of said electric machine (4) and of said electrical power source (5) at all times, said current operating mode being chosen from at least seven operating modes, said seven operating modes comprising:
• a first mode (MOD1), according to which said electric machine (4) implements a standard start-up of said first turboshaft engine (11) initially in a switched-off state, said standard start-up being achieved by rotating a gas generator (111) of said first turboshaft engine (11) with said electric machine (4), said standard start-up allowing said first turboshaft engine (11) to be put in a switched-on state,
• a second mode (MOD2), according to which said electric machine (4) implements a fast start-up of said first turboshaft engine (11) initially in a standby state corresponding to an engine speed chosen from the group comprising an idle speed and a super-idle speed, said first turboshaft engine (11) not supplying any power to a gearbox (14) in said standby state,
• a third mode (MOD3), according to which said electric machine (4) provides a first level of power assistance to said first turboshaft engine (11), said first level of power assistance allowing engine torque to be transmitted to said gas generator (111) of said first turboshaft engine (11) when a free turbine (112) of said first turboshaft engine (11) is rotating at a rotational speed greater than or equal to a threshold value, said first level of power assistance being provided on condition of detection of a failure of said at least one second turboshaft engine (12) of said aircraft (1),
• a fourth mode (MOD4), according to which said electric machine (4) provides a second level of power assistance to said first turboshaft engine (11), said second level of power assistance allowing engine torque to be transmitted to said gas generator (111) of said first turboshaft engine (11) when said free turbine (112) of said first turboshaft engine (11) is rotating at a rotational speed less than said threshold value, said second level of power assistance being provided on condition of detection of a failure of said at least one second turboshaft engine (12) of said aircraft (1), a drop in rotational speed of said at least one rotor (3, 13) or a drop in rotational speed of said free turbine (112) of said first turboshaft engine (11),
• a fifth mode (MOD5), according to which said electric machine (4) applies mechanical resistance to said first turboshaft engine (11), said electric machine (4) allowing resistive torque to be applied to said gas generator (111) of said first turboshaft engine (11),
• a sixth mode (MOD6), according to which said electric machine (4) assists in ventilating said first turboshaft engine (11) in said switched-off state, said ventilation allowing gases to be discharged from said first turboshaft engine (11), said electric machine (4) allowing engine torque to be transmitted to said gas generator (111) of said first turboshaft engine (11), and
• a seventh mode (MOD7), according to which said electric machine (4) is at rest, said electric machine (4) at rest providing neither engine torque nor resistive torque to said gas generator (111) of said first turboshaft engine (11)
such that, during flight and on condition of detection of a failure of said at least one second turboshaft engine (12), said at least one controller (6) is configured to implement successively, during a given flight phase, said second mode (MOD2), said seventh mode (MOD7) and then said third mode (MOD3).

2. Aircraft according to claim 1,
**characterised in that** said electrical power source (5) has a total capacity greater than or equal to the sum of a first capacity configured to cause said at least one controller (6) to implement said second mode (MOD2) during a predetermined first time period and a second capacity configured to cause said at least one controller (6) to implement said third mode (MOD3) during a predetermined third time period.

3. Aircraft according to claim 2,
**characterised in that** said first time period is between 10 seconds and 60 seconds.

4. Aircraft according to any one of claims 2 to 3,
**characterised in that** said seventh mode (MOD7) is implemented by said at least one controller (6) during a predetermined second time period.

5. Aircraft according to claim 4,
**characterised in that** said second time period is between 10 seconds and 60 seconds.

6. Aircraft according to any one of claims 2 to 5,
**characterised in that** said third time period is between 10 seconds and 60 seconds.

7. Method (20) for controlling an aircraft (1) comprising a device (2) configured to be connected to a first turboshaft engine (11) equipping said aircraft (1), said aircraft (1) comprising at least one second turboshaft engine (12) and at least one rotor (3, 13), said at least one rotor (3, 13) being rotated by at least one of said first and second turboshaft engines (11 and 12), said device (2) comprising an electric machine (4) and an electrical power source (5), said method (20) comprising implementation (21) of a current operating mode of said electric machine (4) and said electrical power source (5) at all times, with at least one controller (6), said current operating mode being chosen from at least seven operating modes, said seven operating modes comprising:
• a first mode (MOD1), according to which said electric machine (4) implements a standard start-up of said first turboshaft engine (11) initially in a switched-off state, said standard start-up being achieved by rotating a gas generator (111) of said first turboshaft engine (11) with said electric machine (4), said standard start-up allowing said first turboshaft engine (11) to be put in a switched-on state,
• a second mode (MOD2), according to which said electric machine (4) implements a fast start-up of said first turboshaft engine (11) initially in a standby state corresponding to an engine speed chosen from the group comprising an idle speed and a super-idle speed, said first turboshaft engine (11) not supplying any power to a gearbox in said standby state,
• a third mode (MOD3), according to which said electric machine (4) provides a first level of power assistance to said first turboshaft engine (11), said first level of power assistance allowing engine torque to be transmitted to said gas generator (111) of said first turboshaft engine (11) when a free turbine (112) of said first turboshaft engine (11) is rotating at a rotational speed greater than or equal to a threshold value, said first level of power assistance being provided on condition of detection of a failure of said at least one second turboshaft engine (12) of said aircraft (1),
• a fourth mode (MOD4), according to which said electric machine (4) provides a second level of power assistance to said first turboshaft engine (11), said second level of power assistance allowing engine torque to be transmitted to said gas generator (111) of said first turboshaft engine (11) when said free turbine (112) of said first turboshaft engine (11) is rotating at a rotational speed less than said threshold value, said second level of power assistance being provided on condition of detection of a failure of said at least one second turboshaft engine (12) of said aircraft (1), a drop in rotational speed of said at least one rotor (3, 13) or a drop in rotational speed of said free turbine (112) of said first turboshaft engine (11),
• a fifth mode (MOD5), according to which said electric machine (4) applies mechanical resistance to said first turboshaft engine (11), said electric machine (4) allowing resistive torque to be applied to said gas generator (111) of said first turboshaft engine (11),
• a sixth mode (MOD6), according to which said electric machine (4) assists in ventilating said first turboshaft engine (11) in said switched-off state, said ventilation allowing gases to be discharged from said first turboshaft engine (11), said electric machine (4) allowing engine torque to be transmitted to said gas generator (111) of said first turboshaft engine (11), and
• a seventh mode (MOD7), according to which said electric machine (4) is at rest, said electric machine (4) at rest providing neither engine torque nor resistive torque to said gas generator (111) of said first turboshaft engine (11)
such that, during flight and on condition of detection of a failure of said at least one second turboshaft engine (12), said second mode (MOD2), said seventh mode (MOD7) and then said third mode (MOD3) are implemented successively with said at least one controller (6) during a given flight phase.

8. Method according to claim 7,
**characterised in that** said second mode (MOD2) is implemented by said at least one controller (6) during a predetermined first time period, said seventh mode (MOD7) is implemented by said at least one controller (6) during a predetermined second time period, then said third mode (MOD3) is implemented by said at least one controller (6) during a predetermined third time period.
